# EUROPEAN PATENT SPECIFICATION

(11) **EP 4 568 083 B1**
(45) Date of publication and mention of the grant of the patent: **27.05.2026**
(21) Application number: 23850100.1
(22) Date of filing: 01.08.2023
(51) Int. Cl.: H02K 15/22

(54) **STATOR MANUFACTURING DEVICE AND STATOR MANUFACTURING METHOD**
VORRICHTUNG ZUR HERSTELLUNG EINES STATORS UND VERFAHREN ZUR HERSTELLUNG EINES STATORS
DISPOSITIF DE FABRICATION DE STATOR ET PROCÉDÉ DE FABRICATION DE STATOR

(30) Priority: 04.08.2022 JP 2022125057
(43) Date of publication of application: 11.06.2025
(73) Proprietor: NHK Spring Co., Ltd., Kanagawa 236-0004 (JP)
(72) Inventor: OTSUKA, Motoyuki, Yokohama-shi, Kanagawa 236-0004 (JP)
(74) Representative: DREISS Patentanwälte PartG mbB
(86) International application number: PCT/JP2023/028199
(87) International publication number: WO 2024/029546

(56) References cited:
- EP-B1- 2 661 801
- JP-A- 2013 039 001
- JP-A- 2013 039 001
- JP-A- 2016 146 727
- JP-A- 2017 123 755
- JP-A- 2017 123 755
- US-A1- 2019 296 621
- US-A1- 2021 408 877

## Description

### Technical Field

The present disclosure relates to a stator manufacturing device and a stator manufacturing method.

### Background Art

There is known a structure in which, as the coils that are used in the stator of a rotating electric machine such as a motor or a generator, plural segment coils, which are formed by working linear wire members into substantial U-shapes, are inserted into plural slots disposed along the peripheral direction of the stator. In a stator that includes such segment coils, twisting of the distal ends of the free end sides of the segment coils, and thereafter, electrically connecting them by welding or the like, have conventionally been carried out (see, for example, International Publication No. 2019/093515).

International Publication No. 2019/093515 describes a processing device that inserts the distal end portions of the segment coils into insertion holes or insertion grooves formed in twisting jigs above the stator that is placed on a table, and thereafter, rotating the twisting jigs left and right. Documents US 2019/296621A1 and US 2021/408877A1 disclose related stator manufacturing devices which belong to the prior art.

### SUMMARY OF INVENTION

### Technical Problem

In a device that carries out twisting processing by using twisting jigs above a stator such as the processing device described in International Publication No. 2019/093515, there are cases in which, at the time of the twisting operation or the like, some of the segment coils become wedged into (or dig into) the insertion holes or insertion grooves of the twisting jigs, or the gaps between the plural twisting jigs. When such wedging-in arises, after completion of the twisting processing, it is difficult to separate the segment coils and the twisting jigs even if the table on which the stator is placed is lowered. Therefore, there is the concern that the stator will enter into a state of hanging down from the twisting jigs. If there becomes a state in which the stator hangs down from the twisting jigs, not only will it not be possible to convey the stator to processes thereafter, but also, if the wedged-in state is inadvertently cancelled or the like, there is the concern that the stator will fall, and the stator itself or the device will break.

In view of the above-described problem, an object of the present disclosure is to provide a stator manufacturing device and a stator manufacturing method that can reliably separate segment coils and a twisting jig.

### Solution to Problem

In order to achieve the above-described object, according to the invention a stator manufacturing device as defined in claim 1 is provided. It includes: a placement stand on which is placed a stator having a stator core, which has plural slots, and plural segment coils respectively inserted into the slots; a raising/lowering mechanism raising and lowering the placement stand; a twisting jig disposed above the placement stand, and having insertion portions into which distal end portions, which are exposed at an upper portion of the stator core, of the segment coils can be inserted; a twisting mechanism rotating the twisting jig; and a separating jig that is disposed between the placement stand and the twisting jig, and that pushes the stator, at which the segment coils have been twisted due to the twisting mechanism rotating in a state in which the distal end portions are inserted in the insertion portions, in a direction of moving away from the twisting jig and separates the segment coils and the twisting jig.

In the stator manufacturing device such as described above, due to the separating jig pushing the stator in a direction of moving away from the twisting jig, even in a case in which segment coils are wedged in the insertion portions or the like of the twisting jig, the both members can be reliably separated.

Preferred embodiments are defined in the dependent claims.

In a stator manufacturing device relating to an embodiment, the separating jig includes a separating jig main body disposed between the placement stand and the twisting jig, and a jig moving mechanism that moves the separating jig main body in a vertical direction, and, due to the jig moving mechanism lowering the separating jig main body in accordance with lowering by the raising/lowering mechanism, the separating jig main body pushes the stator core and separates the segment coils and the twisting jig.

In the stator manufacturing device such as described above, because the separating jig can fall by itself, the separating jig can easily push the stator in the direction of moving away from the twisting jig. Further, the force by which the separating jig pushes the stator core can be varied relatively easily.

In a stator manufacturing device relating to a further embodiment, the separating jig includes a separating jig main body disposed between the placement stand and the twisting jig, and a connecting mechanism that connects the separating jig main body and the placement stand, and, due to the connecting mechanism connecting with the placement stand before the placement stand is lowered by the raising/lowering mechanism, and lowering the separating jig main body in accordance with lowering by the raising/lowering mechanism, the separating jig main body pushes the stator core and separates the segment coils and the twisting jig.

In the stator manufacturing device such as described above, because the separating jig is operated in conjunction with the placement stand, the separating jig can push the stator in the direction of moving away from the twisting jig in accordance with the lowering of the placement stand.

In a stator manufacturing device relating to a further embodiment, the separating jig is a cuff supporter unit including a base member that is annular, cuff supporters that are provided at the base member and that are inserted between segment coils exposed at the upper portion of the stator core and that support insulation papers inserted in the slots, and advancing/withdrawing mechanisms that advance/withdraw the cuff supporters in a direction of approaching or moving away from an axial center of the base member.

In the stator manufacturing device such as described above, because the cuff supporter unit that is for protecting the insulation papers can be utilized as the separating jig, the number of parts of the device can be reduced.

In a stator manufacturing device relating to a further embodiment, when the stator that has been placed on the placement stand is raised by the raising/lowering mechanism, a portion of the base member abuts an upper surface of the stator core.

In the stator manufacturing device such as described above, stress, particularly in the vertical direction, with respect to the cuff supporters can be reduced.

In a stator manufacturing device relating to a further embodiment, the above-described stator manufacturing device further includes a rotary-type jig holder disposed between the twisting jig and the separating jig and having plural supporting portions that can support a plurality of the twisting jigs, respectively.

In the stator manufacturing device such as described above, due to various twisting jigs being supported by the supporting portions, the twisting jig that is connected to the twisting mechanism can be changed easily by rotating the jig holder.

A stator manufacturing method according to the invention as defined in claim 7 includes: a step of placing, on a placement stand, a stator having a stator core, which has plural slots, and plural segment coils inserted in the slots respectively; a step of disposing, above the placement stand, a twisting jig having insertion portions into which distal end portions, which are exposed at an upper portion of the stator core, of the segment coils of the stator placed on the placement stand can be inserted; a step of raising the placement stand, and inserting at least portions of the distal end portions of the segment coils into the insertion portions; a step of rotating the twisting jig, and twisting the distal end portions of the segment coils; and a step of lowering the placement stand and operating a separating jig disposed between the placement stand and the twisting jig, and pushing the stator in a direction of moving away from the twisting jig and separating the segment coils and the twisting jig.

In the stator manufacturing method such as described above, by pushing the stator in the direction of moving away from the twisting jig by using the separating jig, even in a case in which segment coils are wedged in the insertion portions of the twisting jig, the both members can be reliably separated.

### Advantageous Effects of Invention

In accordance with the stator manufacturing device and stator manufacturing method of the present disclosure, segment coils and a twisting jig can be separately reliably.

### BRIEF DESCRIPTION OF DRAWINGS

Fig. 1 is a plan view illustrating an example of a stator before twisting processing.
Fig. 2 is a schematic front view of the stator illustrated in Fig. 1.
Fig. 3 is a schematic explanatory drawing illustrating an example of a stator manufacturing device relating to an embodiment of the present disclosure.
Fig. 4 is an enlarged view of main portions illustrating an example of a twisting jig employed in the stator manufacturing device illustrated in Fig. 3, with a portion of the twisting jig shown in cross-section.
Fig. 5 is a plan view illustrating an example of a jig holder employed in the stator manufacturing device illustrated in Fig. 3.
Fig. 6A is a plan view illustrating an example of a cuff supporter unit employed in the stator manufacturing device illustrated in Fig. 3.
Fig. 6B is an enlarged sectional view cut along line B-B of Fig. 6A.
Fig. 7 is a drawing illustrating the relationship between cuff supporters and segment coils, and is a cross-sectional view of main portions cut at the place corresponding to line A-A of Fig. 2.
Fig. 8 is a schematic explanatory drawing illustrating a modified example of the stator manufacturing device relating to the embodiment of the present disclosure.
Fig. 9 is a flowchart illustrating an example of a stator manufacturing method relating to an embodiment of the present disclosure.
Fig. 10A is an explanatory drawing illustrating an operating state of the stator manufacturing device illustrated in Fig. 3.
Fig. 10B is an explanatory drawing illustrating an operating state of the stator manufacturing device illustrated in Fig. 3.
Fig. 10C is an explanatory drawing illustrating an operating state of the stator manufacturing device illustrated in Fig. 3.
Fig. 11A is an explanatory drawing illustrating an operating state of the stator manufacturing device illustrated in Fig. 3.
Fig. 11B is an explanatory drawing illustrating an operating state of the stator manufacturing device illustrated in Fig. 3.
Fig. 11C is an explanatory drawing illustrating an operating state of the stator manufacturing device illustrated in Fig. 3.

### DESCRIPTION OF EMBODIMENTS

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those of ordinary skilled in the art on the basis of the detailed description.

Respective embodiments for implementing the present disclosure are described hereinafter with reference to the drawings. Note that, in the following description, the scope necessary for explanation for achieving the object of the present disclosure is expressed schematically, and mainly the scope needed to explain relevant portions of the present disclosure is described, and portions for which description is omitted are in accordance with known techniques. Further, members that are the same or equivalent in the drawings are denoted by the same or similar reference numerals, and redundant description thereof is omitted. Moreover, there are cases in which reference numerals are applied to only some of the same members in a single drawing, and the application of reference numerals to the other, same members is omitted.

First, a stator 1, on which twisting processing is carried out in the present embodiment, is described briefly before a stator manufacturing device and manufacturing method relating to present embodiments are described.

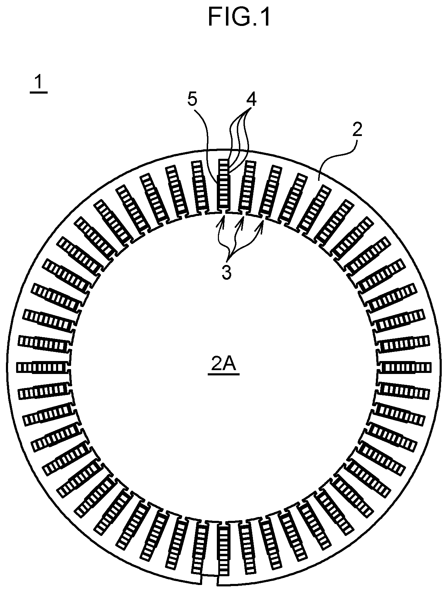

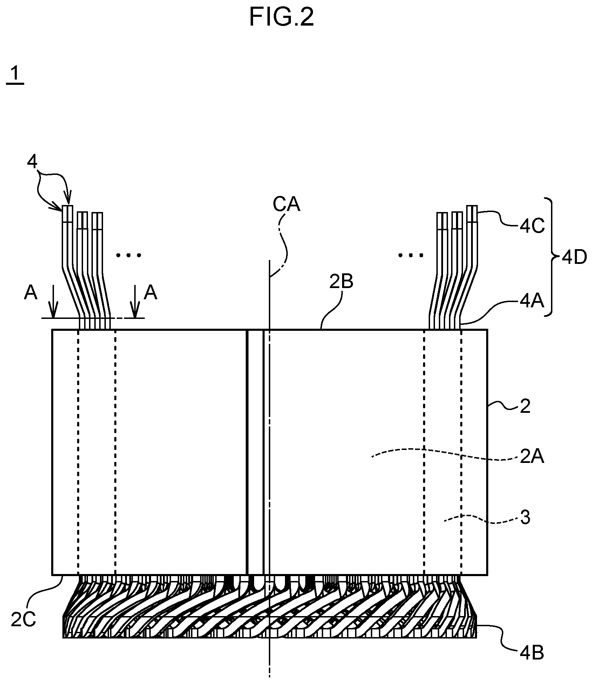

Fig. 1 is a plan view illustrating an example of a stator before twisting processing. Further, Fig. 2 is a schematic front view of the stator illustrated in Fig. 1. Note that, in Fig. 2, illustration of the distal end portions of some segment coils 4 is omitted in order to facilitate understanding of the structure. As illustrated in Fig. 1 and Fig. 2, the stator 1 that is used in the stator manufacturing device and manufacturing method relating to the present embodiments includes a stator core 2 having plural slots 3, and the segment coils 4 inserted in the slots 3. Note that, here, an inner-rotor motor type stator is used as an example of the stator 1, but the stator 1 can be made to be an outer-rotor motor type stator instead.

The stator core 2 can be structured by a conductor that is annular, and more specifically, that is substantially cylindrical tube shaped and at whose central portion a central hole 2A is formed. This stator core 2 can be structured by a magnetic body, and specifically, an electromagnetic steel plate, that includes an annular yoke and teeth projecting out from the inner peripheral surface of the yoke. The stator core 2 can be structured by, for example, plural (e.g., around several tens to several hundred) disc-shaped core pieces, which are formed from plate-shaped bodies that are relatively thin and are around 0.2 to 0.5 mm, being layered along a central axis CA of the stator core 2. Further, the stator core 2 may be a structure in which so-called divisional cores, which are obtained by division into plural sections in the peripheral direction, are combined together. Note that, hereinafter, there are cases in which the direction running along the central axis CA is simply called the "axial direction". Further, the end surface at the upper side of the stator core 2 in Fig. 2 is called upper surface 2B, and similarly, the end surface at the lower side is called lower surface 2C.

The slots 3 can be structured by grooves formed in the inner peripheral surface of the stator core 2 so as to extend in the axial direction with a predetermined interval therebetween in the peripheral direction. The plural segment coils 4 are inserted into these slots 3, and insulation papers 5 for insulating the plural segment coils 4 that have been inserted and the inner walls of the slots 3 may be disposed within the slots 3. Note that other insulating members such as insulators or varnish may be employed instead of the insulation papers 5. Further, the slots 3 do not have to extend parallel to the axial direction, and may be skewed with respect thereto.

The segment coil 4 can be structured by a substantially U-shaped, metal wire member having a pair of leg portions 4A, 4A extending substantially parallel with an interval therebetween, and a curved portion 4B connecting adjacent one end portions of the pair of leg portions 4A, 4A to one another. The segment coil 4 may have, at the end portions of the pair of leg portions 4A, 4A at the sides thereof that are not connected to the curved portion 4B, connecting portions 4C that are electrically connected to the end portions of the other segment coils 4 or the like. These connecting portions 4C may be joined to other connecting portions 4C by welding or the like. Further, although an example is given in which rectangular wires are employed as the wire members used for the segment coils 4, they may be round wires or the like.

There are cases in which the segment coil 4 having the above-described structure is called a hairpin. Further, the segment coils in the present disclosure are not limited in any way to the above-described structure provided that the segment coils form a coil, which is wound on the stator core 2, due to a plurality of the segment coils being electrically connected. Moreover, the surfaces of the segment coils 4 may be covered by an insulating film such as enamel. Further, the present embodiment exemplifies the stator 1 in which six of the leg portions 4A are inserted in a row along a direction intersecting the axial direction, in each of the slots 3.

The segment coils 4 can be inserted into the slots 3 along the axial direction from the opening at the lower surface 2C side, such that most of the pair of leg portions 4A, 4A is accommodated within the slots 3. At the stator 1 illustrated in Fig. 1 and Fig. 2, a structure in which six of the leg portions 4A are inserted into one slot is exemplified. The connecting portions 4C of the segment coils 4 that are inserted in this way, and portions of the leg portions 4A that are adjacent to the connecting portions 4C, are exposed to the exteriors of the slots 3 from the opening at the upper surface 2B side of the stator core 2. In a stator manufacturing device 10 and stator manufacturing method relating to the present embodiments, the portions of the segment coils 4 which portions are exposed to the exteriors of the slots 3 from the opening at the upper surface 2B side of the above-described stator core 2 (hereinafter, these portions are called "distal end portions 4D") are twisted. Note that, in order to facilitate the twisting processing, the distal end portions 4D of the segment coils 4 are preferably subjected in advance to a processing that widens the gaps between the distal end portions 4D of the segment coils 4 that are inserted into the same slot 3.

### <Stator Manufacturing Device>

The stator manufacturing device 10 relating to the present embodiment, which can carry out twisting processing on the distal end portions 4D of the segment coils 4 of the above-described stator 1, is described next. Note that the following explanation exemplifies a case in which the object on which processing is carried out is the above-described stator 1, but the structure of the stator 1 that is the object of processing is not limited to that described above.

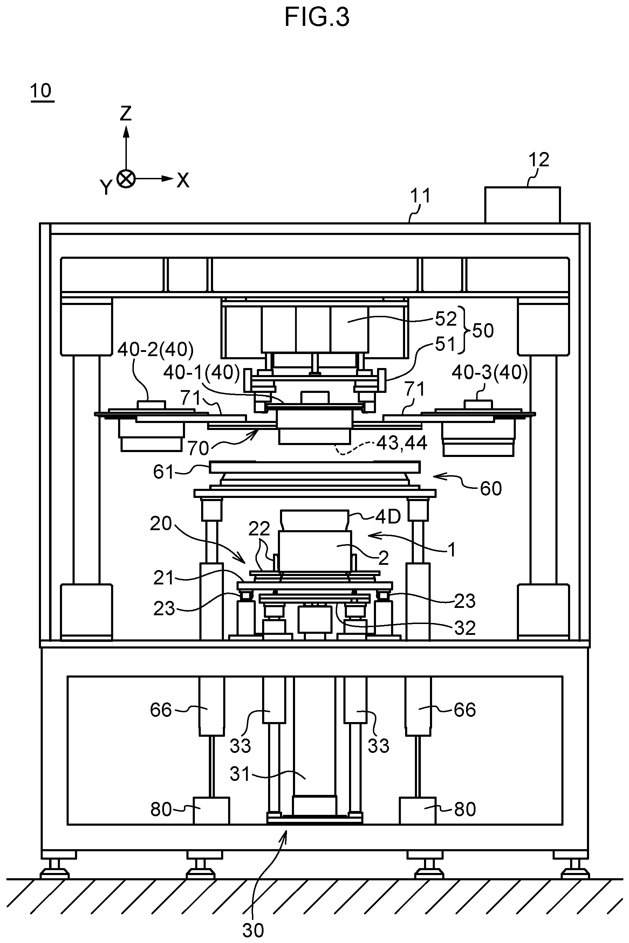

Fig. 3 is a schematic explanatory drawing illustrating an example of the stator manufacturing device relating to an embodiment of the present disclosure. As illustrated in Fig. 3, the stator manufacturing device 10 relating to the present embodiment includes a placement stand 20, a raising/lowering mechanism 30, twisting jigs 40, a twisting mechanism 50, and a cuff supporter unit 60 serving as an example of a separating jig. These structural elements may be disposed within a housing 11. Note that, in the following description, explanation is given by provisionally prescribing the X direction shown in Fig. 3 to be the left-right direction, and similarly, the Y direction to be the front-rear direction, and the Z direction to be the vertical direction. Further, some of the structures in Fig. 3 are illustrated in simplified manners.

In addition, the stator manufacturing device 10 relating to the present embodiment may further include a control device 12 for controlling the entire device including the above-described structural elements. This control device 12 may be a device for controlling the operations of the various structural elements of the stator manufacturing device 10 that are described hereinafter. A sequencer or a computer or the like can be employed as the control device 12. A structure including at least a processor, a volatile and a non-volatile memory, and a communication interface can be employed as the computer that structures the control device 12.

The placement stand 20 is a stand on which the stator 1 can be placed. Specifically, the placement stand 20 may include a placement stand main body 21 that is shaped as a flat plate, positioning members 22 carrying out positioning of the stator 1 that has been placed on the placement stand main body 21, and conveying rollers 23 that support the lower surface of the placement stand main body 21 and that can convey the placement stand main body 21 in one direction (e.g., the front-rear direction). The placement stand main body 21 may be a so-called pallet that is used in moving the stator 1 to various devices at the time of manufacturing the stator 1. The placement stand main body 21 can be conveyed to an arbitrary position by the conveying rollers 23. Accordingly, replacement of the stator 1 and the like are easy. Further, as illustrated in Fig. 3, the stator 1 is placed on the placement stand main body 21 such that the distal end portions 4D of the segment coils 4 are positioned at the upper side.

Among the above-described structures, the positioning members 22 may be members that carry out positioning of the stator 1 in the horizontal direction when the stator 1 has been placed on the placement stand main body 21. Specifically, the positioning members 22 may be disposed so as to surround, of the stator 1 placed on the placement stand main body 21, the curved portions 4B, and at least portions in the vicinity of the lower surface 2C of the stator core 2, of the segment coils 4.

Here, although the stator 1 that is placed on the placement stand 20 is positioned in the horizontal direction as described above, it is of particular importance to note that the stator 1 is not fixed to the placement stand 20. If employing a structure in which the stator 1 is merely placed as described above without being fixed on the placement stand 20, the work of replacing the stator 1 and the like is easy, and the manufacturing efficiency and the like can be improved, as compared with a case in which the stator 1 is fixed to the placement stand 20.

The raising/lowering mechanism 30 is a mechanism for raising or lowering the placement stand 20. Specifically, the raising/lowering mechanism 30 has an actuator 31 for raising/lowering that operates in the vertical direction, a pushing stand 32 connected to the upper side end portion of the actuator 31 for raising/lowering and contacting the lower surface of the placement stand main body 21 at the time when the actuator 31 for raising/lowering operates, and guide rods 33 guiding the vertical direction movement of the pushing stand 32.

The actuator 31 for raising/lowering may be an operating mechanism that moves the placement stand 20 vertically together with the stator 1. Any of various types of actuators can be employed for this actuator 31 for raising/lowering. Specifically, a ball screw mechanism driven by a servo motor, or a linear motor, a single-axis robot, or a hydraulic cylinder connected to a pump can be employed.

The pushing stand 32 may be a structure that, due to the actuator 31 for raising/lowering rising, contacts the lower surface of the placement stand main body 21 and moves the stator 1 to the position where the twisting processing is carried out. Further, due to the end portions of the guide rods 33 that are supported at the housing 11 being connected to appropriate places of the pushing stand 32, e.g., to the respective corner portions thereof, the pushing stand 32 can move vertically without tilting in the horizontal direction.

The twisting jigs 40 are disposed above the placement stand 20, and are jigs for twisting the distal end portions 4D of the segment coils 4. The present embodiment exemplifies a structure that selectively uses three twisting jigs 40-1, 40-2, 40-3 in order to carry out the above-described twisting processing on the stator 1 at which six of the leg portions 4A are inserted into each of the slots 3. Namely, the present embodiment exemplifies a structure that carries out twisting processing in the clockwise direction and the counterclockwise direction on two at a time of the distal end portions 4D of the six segment coils 4 (the leg portions 4A) within each of the slots 3, by using the three twisting jigs 40-1, 40-2, 40-3. Note that the number of twisting jigs used for one stator and the shapes thereof can be changed appropriately.

The three twisting jigs 40-1, 40-2, 40-3 may be supported by a jig holder 70 so as to be movable. Namely, the plural distal end portions 4D can be twisted in order due to the twisting jigs 40-1, 40-2, 40-3 that are supported at the jig holder 70 being selectively connected to the twisting mechanism 50. Note that the structure of supporting by the jig holder 70 and the method of changing the twisting jigs 40-1, 40-2, 40-3 that are used are described later.

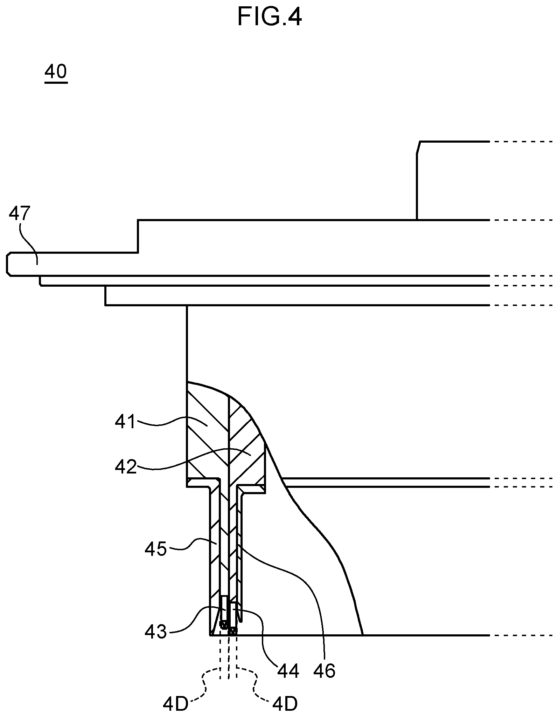

Fig. 4 is an enlarged view of main portions illustrating an example of the twisting jig that is employed in the stator manufacturing device illustrated in Fig. 3, with a portion of the twisting jig shown in cross-section. Note that the aforementioned twisting jigs 40-1, 40-2, 40-3 have the same structure for the most part, other than the dimensions and the like thereof, and therefore, the following description describes the twisting jig 40 as one example of these.

As illustrated in Fig. 3 and Fig. 4, the twisting jig 40 can be structured by a member that is shaped as a cylindrical tube or a solid cylinder. As described above, the twisting jig 40 can twist, among the six leg portions 4A inserted in the slot 3, the distal end portions 4D of two of the segment coils 4. The twisting jig 40 may include an outer crown 41 and an inner crown 42 that are substantially shaped as cylindrical tubes, i.e., whose shapes are substantially crown-shaped, and at which groove-shaped or notch-shaped insertion portions 43, 44, into which the distal end portions 4D of the segment coils 4 can be inserted, are provided at positions that can face the stator 1 that is at the lower side of the twisting jig 40. The insertion portions 43, 44 may be formed so as to match the numbers of and the positions of the distal end portions 4D on which twisting processing is to be carried out, and the wall thickness thereof may be adjusted so as to be slightly thicker than the wall thickness, along a direction intersecting the axial direction, of the distal end portions 4D on which twisting processing is to be carried out. Note that Fig. 4 exemplifies a structure in which two crowns are included as the twisting jig 40, but the number of crowns that one twisting jig has can be changed appropriately.

The outer crown 41 and the inner crown 42 may be disposed coaxially, and may be rotated individually around a common axial center. Specifically, at the time of the twisting processing of the outer crown 41 and the inner crown 42, the both may be rotated in opposite directions. In this way, the distal end portions 4D of the segment coils 4 after twisting processing has been carried out thereon are adjusted such that twisting processing is carried out in the direction (e.g., the counterclockwise direction) opposite the twisting direction (e.g., the clockwise direction) of the distal end portion 4D that is adjacent at the inner side or the outer side thereof.

It is preferable that guide rings 45, 46 be provided respectively at the outer side portion of the outer crown 41 and the inner side portion of the inner crown 42, respectively. Owing to these guide rings 45, 46, the engaged state of the side surfaces of the insertion portions 43, 44 and the distal end portions 4D at the time of twisting the distal end portions 4D being cancelled inadvertently, and the distal end portions 4D contacting, at the time of the twisting processing, other distal end portions 4D that are adjacent thereto and that have been twisted or are to be twisted, can be suppressed.

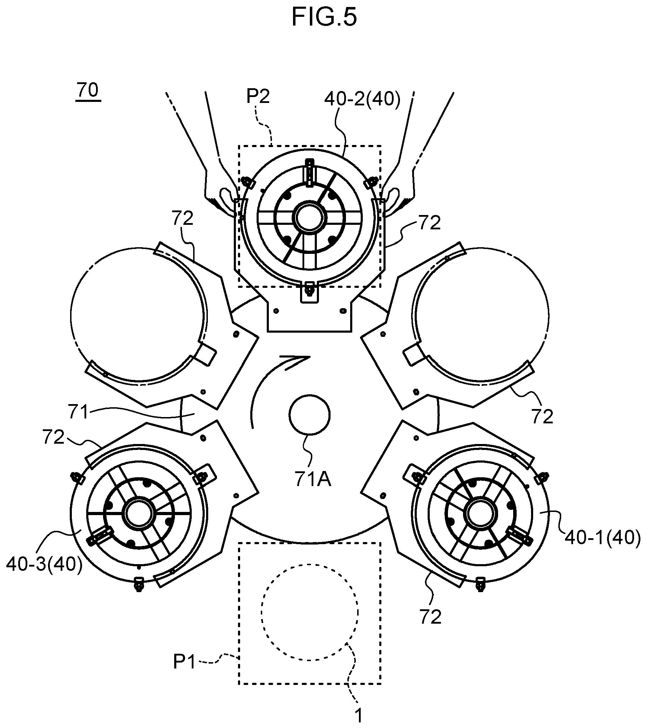

Fig. 5 is a plan view illustrating an example of a jig holder employed in the stator manufacturing device illustrated in Fig. 3. The vertical direction position of the jig holder 70 is between the twisting mechanism 50 and the cuff supporter unit 60, and the jig holder 70 can be structured by a member that can support the plural twisting jigs 40-1, 40-2, 40-3. The jig holder 70 may mainly include a holder main body 71 that is substantially disc-shaped and extends along the horizontal direction, and supporting claws 72 serving as an example of supporting portions that can support twisting jigs of various shapes (e.g., the twisting jigs 40-1, 40-2, 40-3).

The holder main body 71 can be made able to rotate around rotational center 71A that extends in the vertical direction. The plural, e.g., five, supporting claws 72 that are disposed at a predetermined interval around this holder main body 71 may be made able to support one twisting jig 40 each. Accompanying rotation of the holder main body 71, the supporting claws 72 can move between a usage position P1 at which the supported twisting jig 40 faces the stator 1 placed on the placement stand 20, and a setting position P2 at which the arbitrary twisting jig 40 is set by a worker or the like.

It is good to operate the above-described jig holder 70 such that one or plural twisting jigs 40, which take into consideration the number and placement and the like of the segment coils 4 of the stator 1 that are to be subjected to twisting processing, are set in advance in the supporting claws 72 at the setting position P2, and these twisting jigs 40 are successively moved to the usage position P1. Due thereto, by rotating the jig holder 70, the connecting of, and the cancelling of the connection of, the desired twisting jig 40 with the twisting mechanism 50 can be carried out, and it suffices for a worker to merely set an arbitrary twisting jig in the supporting claw 72 that is at the setting position P2. In other words, the majority of the work of replacing the twisting jig that is connected to the twisting mechanism 50 can be automated. Note that the above-described example exemplifies a structure in which the jig holder 70 is a rotary type having the rotational center 71A, but the present embodiment is not limited to this. For example, a horizontal conveying type jig holder, in which the supporting claws move horizontally, can be employed instead of the above-described structure.

Further, Fig. 5 exemplifies a structure in which the twisting jigs 40-1, 40-2, 40-3 are respectively supported at three of the supporting claws 72 among the five supporting claws 72 that the jig holder 70 has. However, what shape of twisting jig 40 is to be supported at what supporting claw 72 can be changed appropriately. Accordingly, for example, one twisting jig, which includes six crowns and which can twist all of the segment coils 4 of the above-described stator 1, may be supported at one of the supporting claws 72.

The twisting mechanism 50 is connected to the twisting jig 40, and specifically, to the one twisting jig 40 that is disposed at the usage position P1 by the jig holder 70, and rotates this twisting jig 40. The twisting mechanism 50 may be structured to include mainly a grasping arm 51 that grasps the twisting jig disposed at the usage position P1, and a rotating mechanism 52 that rotatingly operates the one or plural crowns included in the twisting jig 40.

The grasping arm 51 may grasp a flange portion 47 that is formed at an arbitrary position of the twisting jig 40, e.g., at the outer periphery of the twisting jig 40. The rotating mechanism 52 can be formed by a motor or the like, and may have an arbitrary connection structure that can transmit rotational force to the outer crown 41 and the inner crown 42 of the twisting jig 40 respectively. Note that, although the present embodiment exemplifies a structure in which the twisting mechanism 50 does not move in the vertical direction, a structure may be further employed that can move the twisting mechanism 50 vertically, for example, at the time of rotating the twisting mechanism 50.

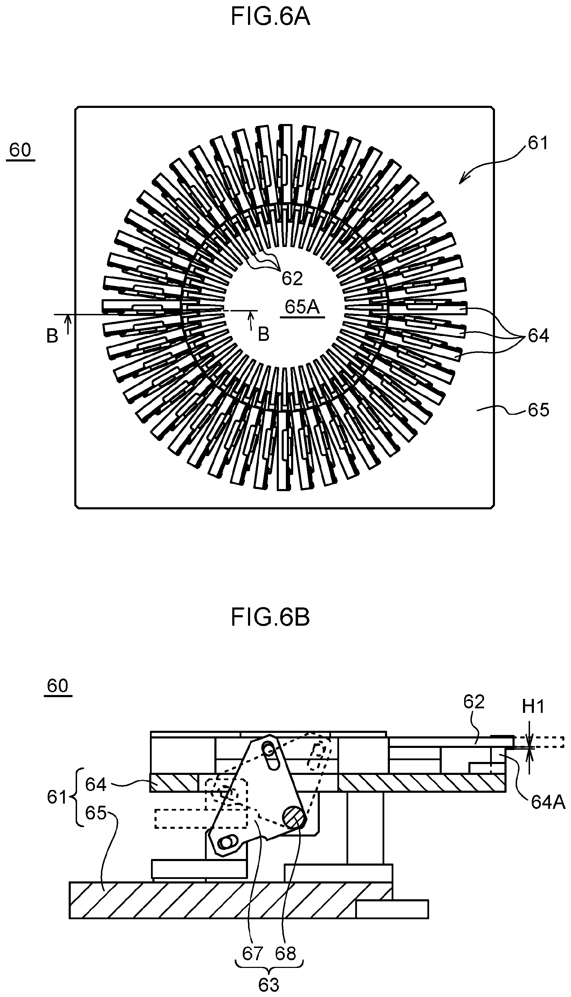

Figs. 6A and 6B illustrates an example of the cuff supporter unit employed in the stator manufacturing device illustrated in Fig. 3. Fig. 6A is a plan view, and Fig. 6B is an enlarged sectional view cut along line B-B of Fig. 6A. Note that Fig. 6A illustrates a projected state in which cuff supporters 62 are projected. In Fig. 6B, a retracted state in which the cuff supporter 62 is retracted is illustrated by the solid lines, and the projected state is illustrated by the dashed lines, respectively. Further, a portion of Fig. 6B is illustrated as an end sectional view in order to facilitate understanding of the operation of the cuff supporter 62.

As illustrated in Fig. 3 and Fig. 6, the cuff supporter unit 60 that serves as an example of a separating jig is disposed between the placement stand 20 and the twisting jigs 40. The cuff supporter unit 60 may include a base member 61 that is substantially annular and serves as an example of a separating jig main body, the cuff supporters 62 provided at the base member 61, and advancing/withdrawing mechanisms 63 that advance and withdraw the cuff supporters 62 in directions of approaching and moving away from the axial center of the base member 61.

The base member 61 may include cuff supporter supporting portions 64 at which the cuff supporters 62 are set, and a base main body 65 disposed at the lower sides of the cuff supporter supporting portions 64 with a predetermined interval therebetween. The plural cuff supporter supporting portions 64 may be lined-up in a substantially circular form on the base main body 65 so as to support the cuff supporters 62, respectively. Further, a through-hole 65A through which the segment coils 4 of the stator 1 can pass may be formed in the substantially central portion of the base main body 65. One ends of guide cylinders 66, which guide the vertical direction movement of the base member 61, may be connected to the base main body 65.

It is good to provide abutting projections 64A, which abut the upper surface 2B of the stator core 2 at the time when the stator 1 that is placed on the placement stand 20 is raised, at the end portions that are at the inner peripheral surface sides of the respective cuff supporter supporting portions 64. In particular, the surfaces of the abutting projections 64A which surfaces abut the stator core 2 are preferably positioned so as to be lower, by distance H1, than the lower surfaces of the cuff supporters 62. Due thereto, it is difficult for stress that is generated at the time of twisting processing and at the time of operating the stator 1, and vertical direction stress in particular, to be applied to the cuff supporters 62, and damage to the cuff supporters 62 can be suppressed.

The cuff supporters 62 may be members that are provided at the cuff supporter supporting portions 64 and that can support the end portions (there are cases in which these portions are called cuff portions) of the insulation papers 5 that are inserted into the slots 3 and are exposed at the upper surface 2B of the stator core 2. The cuff supporters 62 may be inserted at the upper portion of the stator core 2, and more specifically, between the segment coils 4 that are exposed at the exteriors of the slots 3 from the upper surface 2B of the stator core 2. In connection therewith, it is good for a number of the cuff supporters 62, which is the same as the number of the gaps between the segment coils 4, or in other words, the number of the teeth of the stator core 2, to be disposed at the base member 61 in a substantially circular form in a state of being able to project out along the extending direction of the teeth toward the direction at which the through-hole 65A is provided. Due to the insulation papers 5 being supported by the cuff supporters 62, breakage of the insulation papers 5 at the time of the twisting processing and the like can be suppressed. Note that the cuff supporters 62 can function also as the starting points at the time of carrying out the twisting processing that is described later.

The advancing/withdrawing mechanism 63 may be a mechanism for advancing/withdrawing the cuff supporter 62 in a direction of approaching or moving away from the axial center of the base member 61. This advancing/withdrawing mechanism 63 can be made to be a structure that mainly includes a swinging cam 67 whose one end is rotatably fixed to the proximal end side of the cuff supporter 62, and a supporting shaft 68 rotatably supporting the swinging cam 67. Due to the swinging cam 67 being operated, the cuff supporter 62 can be advanced/withdrawn between a projected state in which the distal end of the cuff supporter 62 is inserted between the segment coils 4, and a retracted state in which the distal end of the cuff supporter 62 is retracted to the cuff supporter supporting portion 64 side. Note that the above-described structure of the advancing/withdrawing mechanism 63 is an example, and another driving mechanism such as a plunger or a motor can be employed.

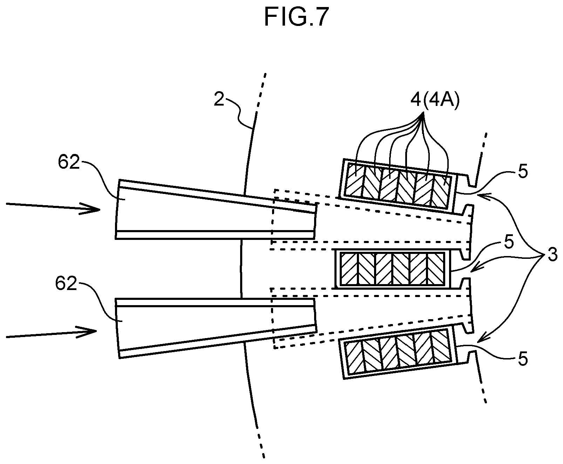

Fig. 7 is a drawing illustrating the relationship between cuff supporters and segment coils, and is a cross-sectional view of main portions cut at a place corresponding to line A-A of Fig. 2. When the stator 1 that has been placed on the placement stand 20 is raised and reaches the position where the cuff supporter unit 60 is disposed, and the upper surface 2B of the stator core 2 and the abutting projections 64A of the base member 61 abut one another, the operation of projecting the cuff supporters 62 is carried out. The cuff supporters 62 support peripheral direction surfaces of adjacent segment coils 4 due to the distal ends of the cuff supporters 62 being inserted into the gaps between the segment coils 4.

At the cuff supporter unit 60 having the above-described structure, due to the stator 1 being raised, the upper surface 2B of the stator core 2 and the abutting projections 64A of the base member 61 abut one another, and thereafter, the cuff supporter unit 60 can be raised or lowered following the operation of the stator 1. Therefore, manufacturing of the stator 1 is possible even if the cuff supporter unit 60 does not have a separate moving mechanism that moves the cuff supporter unit 60 in the vertical direction. However, the cuff supporter unit 60 relating to the present embodiment may separately employ, in addition to the above-described structure and as a specific means for realizing the function as a separating jig, a jig moving mechanism 80 that can move the base member 61 in the vertical direction (or only downward). This jig moving mechanism 80 may be any structure provided that it can, by itself, move the cuff supporter unit 60 in the vertical direction. As illustrated in Fig. 3, the present embodiment exemplifies a case employing a mechanism that is connected to the guide cylinders 66 and can control operation of the piston rods of the guide cylinders 66.

As described above, the jig moving mechanism 80 is an example of a structure for the cuff supporter unit 60 to realize its function as a separating jig. Accordingly, the jig moving mechanism 80 can function in order to push the stator 1, at which the segment coils 4 have been twisted by operation of the twisting jig 40, in a direction of moving away from the twisting jig 40, and specifically, downward. Specifically, after the twisting processing, the jig moving mechanism 80 is operated in accordance with the lowering by the raising/lowering mechanism 30, and lowers the base member 61, and the upper surface 2B of the stator core 2 is thereby pushed by the abutting projections 64A of the base member 61.

In this way, at the stator manufacturing device 10 relating to the present embodiment, by employing the cuff supporter unit 60 that functions as a separating jig, the segment coils 4, after twisting processing has been completed, and the twisting jig 40 can be separated. Due thereto, even if some of the segment coils 4 become wedged into the insertion portions of the twisting jig 40 or the gaps adjacent to the insertion portions at the time of the twisting processing, the segment coils 4 and the twisting jig 40 can be separated reliably at the time when the placement stand 20 is lowered.

Further, by employing the above-described jig moving mechanism 80, the force, by which the cuff supporter unit 60 pushes the stator 1 in the direction of moving away from the twisting jig 40, can easily be changed by adjusting the output of the jig moving mechanism 80. Further, by monitoring the output of the jig moving mechanism 80, the absence/presence of the occurrence of wedging-in of the segment coils 4 into the gaps of the twisting jig 40 also can be inferred.

The above-described stator manufacturing device 10 relating to the present embodiment exemplifies a structure in which the segment coils 4 and the twisting jig 40 are separated due to the base member 61 being lowered by using the jig moving mechanism 80. However, the method of separating is not limited to a method using the jig moving mechanism 80. Thus, stator manufacturing device 10A, which serves as a modified example of the above-described stator manufacturing device 10, is described hereinafter.

### <Modified Example>

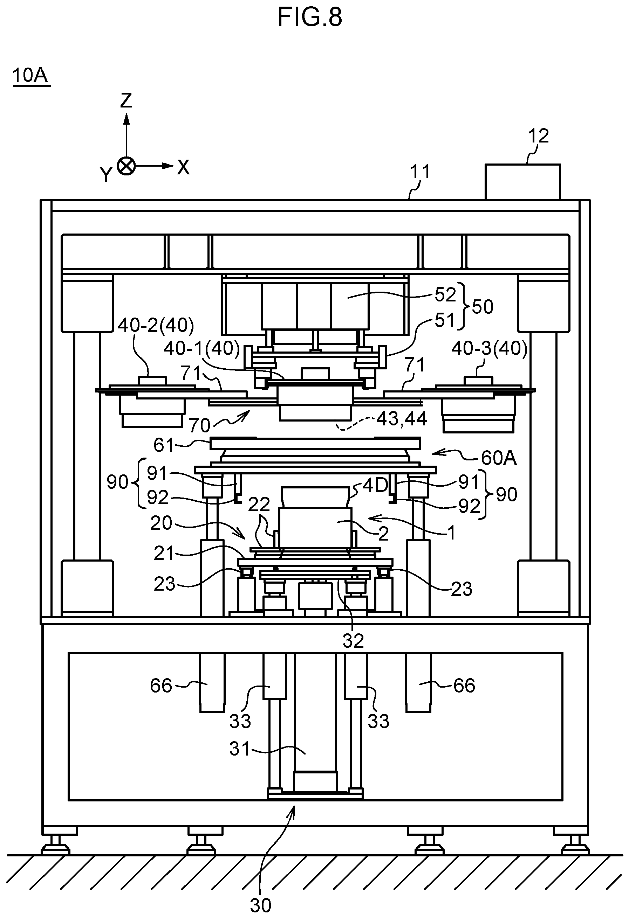

Fig. 8 is a schematic explanatory drawing illustrating a modified example of the stator manufacturing device relating to the embodiment of the present disclosure. As illustrated in Fig. 8, the stator manufacturing device 10A relating to the present modified example is similar to the above-described stator manufacturing device 10 except for some of the structure of a cuff supporter unit 60A that serves as an example of the separating jig. Thus, hereinafter, of the stator manufacturing device 10A relating to the present modified example, only the points that differ from the stator manufacturing device 10 are described, and the above description of the stator manufacturing device 10 is used also for structures that are similar to those of the stator manufacturing device 10, and description of the similar structures is omitted.

The cuff supporter unit 60A of the stator manufacturing device 10A is similar to the above-described cuff supporter unit 60 with regard to the point that the cuff supporter unit 60A has the base member 61, the cuff supporters 62 and the advancing/withdrawing mechanisms 63. On the other hand, instead of the jig moving mechanism 80 being connected to the cuff supporter unit 60A, a connecting mechanism 90 that extends toward the placement stand 20 is formed at the lower surface of the base member 61. In relation thereto, the guide cylinders 66 of the cuff supporter unit 60A is not independently control the movement of the base member 61 but can be configured to merely guide the vertical direction movement of the base member 61.

The connecting mechanism 90 can be made to include arms 91 extending toward the placement stand 20 from plural places of the lower surface of the base member 61, and connecting hooks 92 provided at the distal ends of the respective arms 91 and able to connect to the placement stand 20. The length of the arms 91 is preferably adjusted in consideration of the axial direction length of the stator core 2, and the like. Further, the specific structure of the connecting hooks 92 is not particularly limited provided that, at arbitrary times, the connecting hooks 92 can connect with portions of the placement stand 20 and the connection thereof can be cancelled, and may be a connecting structure other than hooks.

The connecting mechanism 90 that includes the above-described structures can connect with the placement stand 20 when the placement stand 20 on which the stator 1 has been placed is moved upward by the raising/lowering mechanism 30, and the upper surface 2B of the stator core 2 abuts the abutting projections 64A of the cuff supporter unit 60A. Specifically, the connecting mechanism 90 may be a structure in which, due to the connecting hooks 92 being operated, the connecting hooks 92 anchor on the edge portion of the placement stand 20 and connect the placement stand 20 and the cuff supporter unit 60A.

When the placement stand 20 and the cuff supporter unit 60A are connected by the connecting mechanism 90, the cuff supporter unit 60A moves in the vertical direction following the movement of the placement stand 20. Accordingly, after the twisting processing by the twisting jig 40, when the lowering operation of the raising/lowering mechanism 30 starts, the cuff supporter unit 60A falls together with the placement stand 20. Due thereto, the base member 61 of the cuff supporter unit 60A pushes the upper surface 2B of the stator core 2. Accordingly, at the stator manufacturing device 10A relating to the present modified example as well, the segment coils 4 and the twisting jig 40 can be separated reliably.

Further, in a case of employing the above-described connecting mechanism 90, because there is no need to separately control the timing of lowering the cuff supporter unit 60 that serves as the separating jig, the separating jig can be realized by a simple structure.

In the above-described stator manufacturing device 10, 10A, the segment coils 4 and the twisting jig 40 can be reliably separated due to the separating jig (specifically, the cuff supporter unit 60, 60A) falling together with the placement stand 20 after twisting processing of the stator 1. On the other hand, the separating jig of the present disclosure is not limited to the above-described structures provided that it can push the stator 1 after the twisting processing. Specifically, for example, between the cuff supporter unit 60 and the twisting jigs 40, or between the cuff supporter unit 60 and the stator core 2, cam members that function so as to push them in directions of separating from one another may be provided as the separating jig, and these cam members may be operated in accordance with the time at which the placement stand 20 falls. Further, the present embodiment and modified example are both examples in which the separating jig is structured by the cuff supporter unit 60, 60A, but the separating jig may be provided as a member separate from the cuff supporter unit 60.

### <Stator Manufacturing Method>

A stator manufacturing method relating to an embodiment of the present disclosure is described next. The present embodiment exemplifies a method that uses the above-described stator manufacturing device 10 as the device that executes this stator manufacturing method and that manufactures the above-described stator 1. However, it should be clearly understood that the manufacturing method of the present disclosure is not limited to implementation by the above-described manufacturing device 10, and further, that stators of structures different than that of the above-described stator 1 can be manufactured. Note that description of the effects and the like that are described hereinafter also serves as description of the effects of the stator manufacturing device 10 relating to the present embodiment.

Further, the stator manufacturing method that is described hereinafter can be implemented, for example, due to various structural elements of the stator manufacturing device 10 operating on the basis of predetermined commands from a computer that structures the control device 12 included in the stator manufacturing device 10. Accordingly, the stator manufacturing method relating to the present embodiment can be provided in the form of a program that is software or the like and includes commands for causing the processor of the computer structuring the above-described control device 12 to execute predetermined operations, or in the form of a non-transitory recording medium on which this program is stored, or in the form of an application program provided via a network or the like.

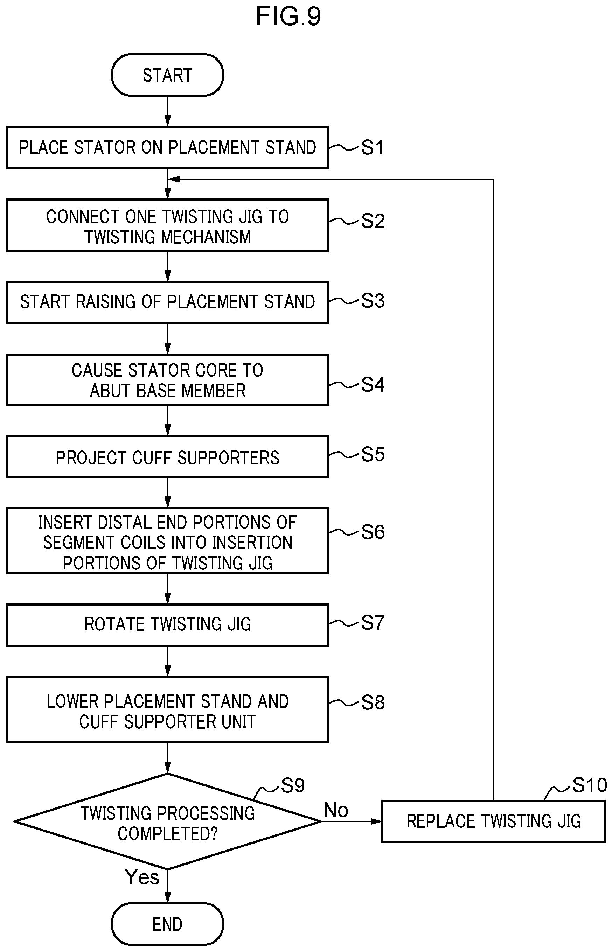

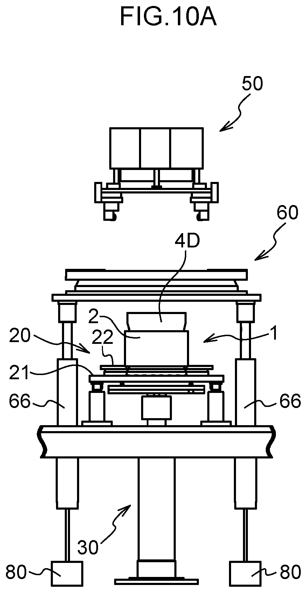

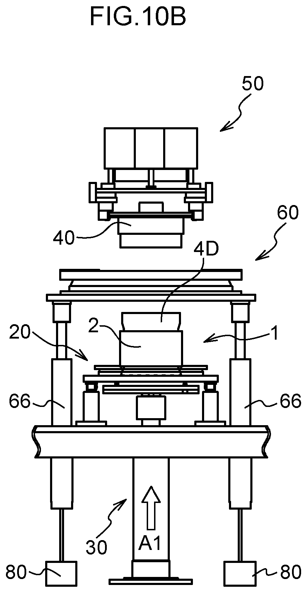

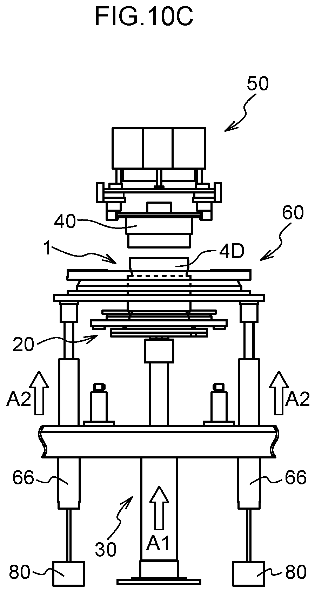

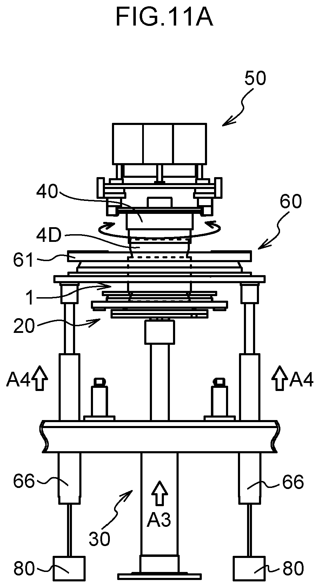

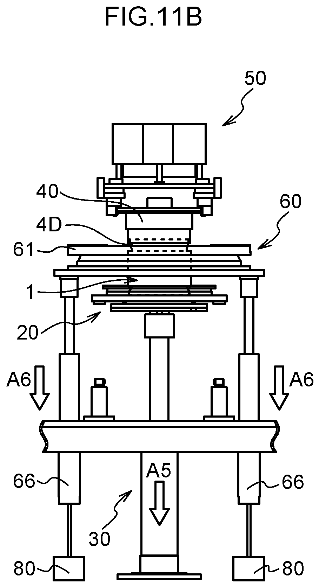

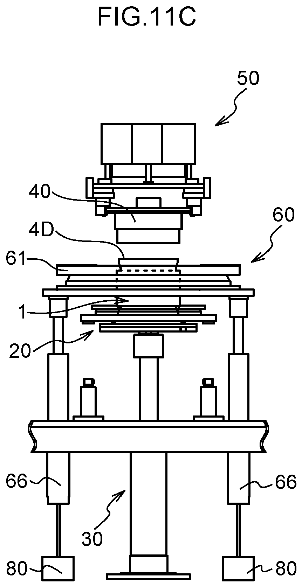

Fig. 9 is a flowchart illustrating an example of the stator manufacturing method relating to an embodiment of the present disclosure. Further, Fig. 10 and Fig. 11 are explanatory drawings illustrating operating states of the stator manufacturing device illustrated in Fig. 3. Note that, in Fig. 10 and Fig. 11, illustration of structural elements other than the main operating parts, such as the housing 11 and the guide rods 33, is omitted for easy understanding of the operating states.

In the stator manufacturing method relating to the present embodiment, as illustrated in Fig. 9, first, the stator 1 on which twisting processing is to be carried out is placed on the placement stand 20 (step S1). The stator 1 that has been placed on the placement stand 20 is positioned by the positioning members 22 such that the central axis CA of the stator 1 is positioned coaxially with the center of the twisting mechanism 50 and the center of the cuff supporter unit 60 (see Fig. 10A).

When the stator 1 is placed on the placement stand 20, one of the twisting jigs 40 for twisting the stator 1 is selected and is connected to the twisting mechanism 50 (step S2, see Fig. 10B). The selected twisting jig 40 is placed at a position at which it can be connected to the twisting mechanism 50 by being conveyed to the usage position P1 by the jig holder 70 (note that illustration thereof is omitted in Fig. 10B). Note that the order of step S1 and step S2 is not limited to that described above.

When the twisting jig 40 is connected to the twisting mechanism 50, next, the raising/lowering mechanism 30 is operated, and raising of the placement stand 20 is started (step S3) as shown by arrow A1 in Fig. 10B, and the upper surface 2B of the stator core 2 of the stator 1 on the placement stand 20 and the abutting projections 64A of the base member 61 of the cuff supporter unit 60 are made to abut one another (step S4, see Fig. 10C).

By operating the advancing/withdrawing mechanisms 63 in the state in which the upper surface 2B of the stator core 2 and the abutting projections 64A of the base member 61 abut one another, the cuff supporters 62 are displaced from the retracted states to the projected states (step S5). Because the projected cuff supporters 62 support the peripheries of the distal end portions 4D of the segment coils 4 together with the insulation papers 5, the portions that are supported by the cuff supporters 62 can become the starting points (or the supporting points) of the time of the twisting processing that is described later.

When the upper surface 2B of the stator core 2 and the abutting projections 64A of the base member 61 abut one another, control is carried out such that the jig moving mechanism 80 operates, and the cuff supporter unit 60 moves, and in detail, rises as illustrated by arrows A2 in Fig. 10C, in accordance with the movement of the placement stand 20. When the stator 1 rises further accompanying raising by the raising/lowering mechanism 30 and the jig moving mechanism 80, at least some of the distal end portions 4D of the segment coils 4 are inserted in the insertion portions of the twisting jig 40 (step S6). When the distal end portions 4D of the segment coils 4 are inserted in the insertion portions of the twisting jig 40, the raising/lowering mechanism 30 and the jig moving mechanism 80 stop temporarily.

The twisting jig 40 that was selected in step S2 may be a jig that can, for example, carry out twisting processing on all of the six segment coils 4 that are inserted in each of the slots 3 of the stator 1. In this case, that twisting jig 40 may have six crowns that can respectively rotate in the form of concentric circles, and it is good for insertion portions, into which portions of the distal end portions 4D of the segment coils 4 can be inserted, to be formed in each crown. Here, it suffices for, of the distal end portions 4D of the segment coils 4, the portions thereof that are to become the connecting portions 4C to be inserted in the insertion portions. It is good to adjust the length of the insertion portions of the twisting jig 40 or the raised/lowered position of the placement stand 20 in accordance therewith.

When insertion of the distal end portions 4D of the segment coils 4 into the insertion portions of the twisting jig 40 is completed, due to the twisting mechanism 50 rotating, the respective crowns of the twisting jig 40 are rotated in the clockwise direction and the counterclockwise direction (step S7, see Fig. 11A). The distal end portions 4D of the segment coils, whose end portions are inserted in the insertion portions of the respective crowns, are twisted by the rotation of the crowns. At this time, as illustrated by arrows A3, A4 in Fig. 11A, when the raising/lowering mechanism 30 and the jig moving mechanism 80 are raised further in accordance with the twisting operation of the respective crowns, the occurrence of stretching and breakage and the like of the segment coils 4 can be suppressed, which is preferable.

When the rotating operation of the respective crowns of the twisting jig 40 is completed, by withdrawing the distal end portions 4D of the segment coils 4 from the insertion portion interiors, the both are separated. At this time, in the stator manufacturing method relating to the present embodiment, in order to reliably separate the twisting jig 40 and the segment coils 4, both the placement stand 20 and the cuff supporter unit 60 are lowered as illustrated by arrows A5, A6 in Fig. 11B (step S8). The lowering of the placement stand 20 can be realized by the raising/lowering mechanism 30, and the lowering of the cuff supporter unit 60 can be realized by the jig moving mechanism 80.

As described above, when the cuff supporter unit 60 falls in accordance with the falling of the placement stand 20, the base member 61 of the cuff supporter unit 60 falls, and therefore, the abutting projections 64A of the base member 61 push the upper surface 2B of the stator core 2 downward. Due thereto, the weight of the stator 1 itself and the pushing force from the cuff supporter unit 60 work to separate the segment coils 4 and the twisting jig 40. Therefore, for example, even if portions of the segment coils 4 are wedged in gaps of the twisting jig 40, separating of the segment coils 4 and the twisting jig 40 can be carried out reliably.

When the segment coils 4 and the twisting jig 40 are separated due to the falling of the placement stand 20 and the cuff supporter unit 60A, it is judged whether or not the twisting processing has been completed (step S9). For example, in a case in which segment coils 4 at which twisting processing has not been completed remain at the stator 1 (No in step S9), the twisting jig 40 that is connected to the twisting mechanism 50 is replaced with a twisting jig that can twist the segment coils 4 for which twisting processing has not been completed (step S10), and the process returns to step S2. In a case in which the twisting processing has been completed (Yes in step S10), the cuff supporters 62 are set in the retracted states, the cuff supporter unit 60 and the stator 1 are separated, and the placement stand 20 is lowered to onto the conveying rollers 23. Thereafter, the stator 1 is conveyed to the next step (e.g., a step of welding the connecting portions 4C).

The above stator manufacturing method describes an example of executing the method by using the stator manufacturing device 10, but this method can also be implemented by using another device, e.g., the stator manufacturing device 10A. In this case, instead of the operation of lowering the cuff supporter unit 60 by the jig moving mechanism 80, it is good to employ (after step S4 for example) a step of fixing the cuff supporter unit 60 to the placement stand 20 by using the connecting mechanism 90.

As described above, in the stator manufacturing device and manufacturing method relating to the present embodiments, the segment coils 4 and the twisting jig 40 can be reliably separated by employing the separating jig that pushes the stator, which is after the twisting processing has been carried out, in the direction of moving away from the twisting jig 40. Further, because the series of twisting processings can be executed by employing the separating jig and without fixing the stator 1 to the placement stand 20, a manufacturing device and manufacturing method having good manufacturing yield can be provided.

The present disclosure is not limited to the above-described embodiment, and can be implemented by being changed in various ways within a scope that does not depart from the scope of protection defined in the independent claims. Further, all of these are included in the technical concept of the present disclosure. Moreover, in the present disclosure, there may be only one of each of the structural elements or there may be two or more thereof, provided that a contradiction does not arise.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications within the scope of protection defined in the claims appended hereto. Moreover, any combination of the above-described elements in all possible variations thereof is encompassed by the disclosure unless otherwise indicated herein or otherwise clearly contradicted by context.

## Claims

1. A stator manufacturing device, comprising:
a placement stand on which is placed a stator having a stator core, the stator core having a plurality of slots, and the stator further having a plurality of segment coils respectively inserted into the slots;
a raising/lowering mechanism that raises and lowers the placement stand;
a twisting jig that is disposed above the placement stand and has insertion portions into which distal end portions, which are exposed at an upper portion of the stator core, of the segment coils can be inserted;
a twisting mechanism that rotates the twisting jig; **characterised in that** it further comprises
a separating jig that is disposed between the placement stand and the twisting jig, and that pushes the stator, at which the segment coils have been twisted as a result of the twisting mechanism rotating in a state in which the distal end portions are inserted into the insertion portions, in a direction of moving away from the twisting jig and separates the segment coils and the twisting jig.

2. The stator manufacturing device of claim 1, wherein the separating jig comprises a separating jig main body disposed between the placement stand and the twisting jig, and a jig moving mechanism that moves the separating jig main body in a vertical direction, and, as a result of the jig moving mechanism lowering the separating jig main body in accordance with lowering by the raising/lowering mechanism, the separating jig main body pushes the stator core and separates the segment coils from the twisting jig.

3. The stator manufacturing device of claim 1, wherein the separating jig comprises a separating jig main body disposed between the placement stand and the twisting jig, and a connecting mechanism that connects the separating jig main body and the placement stand, and, as a result of the connecting mechanism being connected with the placement stand before the placement stand is lowered by the raising/lowering mechanism, and the separating jig main body being lowered in accordance with lowering by the raising/lowering mechanism, the separating jig main body pushes the stator core and separates the segment coils from the twisting jig.

4. The stator manufacturing device of any one of claim 1 through claim 3, wherein the separating jig is a cuff supporter unit having a base member that is annular, cuff supporters that are provided at the base member and that are inserted between segment coils exposed at the upper portion of the stator core and that support insulation papers inserted in the slots, and advancing/withdrawing mechanisms that advance/withdraw the cuff supporters in a direction of approaching or moving away from an axial center of the base member.

5. The stator manufacturing device of claim 4, wherein, when the stator that has been placed on the placement stand is raised by the raising/lowering mechanism, a portion of the base member abuts an upper surface of the stator core.

6. The stator manufacturing device of claim 1, further comprising a rotary-type jig holder disposed between the twisting jig and the separating jig and having a plurality of supporting portions configured to respectively support a plurality of the twisting jigs.

7. A stator manufacturing method, comprising:
a step of placing, on a placement stand, a stator having a stator core, the stator core having a plurality of slots, and the stator further having a plurality of segment coils respectively inserted into the slots;
a step of disposing, above the placement stand, a twisting jig having insertion portions into which distal end portions, which are exposed at an upper portion of the stator core, of the segment coils of the stator placed on the placement stand can be inserted;
a step of raising the placement stand, and inserting at least portions of the distal end portions of the segment coils into the insertion portions;
a step of rotating the twisting jig, and twisting the distal end portions of the segment coils; and
a step of lowering the placement stand and operating a separating jig disposed between the placement stand and the twisting jig, and pushing the stator in a direction of moving away from the twisting jig and separating the segment coils from the twisting jig.

## Patentansprüche

1. Statorherstellungsvorrichtung, umfassend:
ein Platzierungsablageständer, auf dem ein Stator platziert ist, der einen Statorkern aufweist, wobei der Statorkern eine Vielzahl von Schlitzen aufweist und der Stator ferner eine Vielzahl von Segmentspulen aufweist, die jeweils in die Schlitze eingeführt sind;
ein Hebe-/Senkmechanismus, der den Platzierungsablageständer hebt und senkt;
eine Verdrehungsspanner, der oberhalb des Platzierungsablageständers angeordnet ist und Einführungsabschnitte aufweist, in die distale Endabschnitte, die an einem oberen Abschnitt des Statorkerns freigelegt sind, der Segmentspulen eingeführt werden können;
ein Verdrehungsmechanismus, der den Verdrehungsspanner dreht; **dadurch gekennzeichnet, dass** sie ferner umfasst
einen Trennungsspanner, der zwischen dem Platzierungsablageständer und dem Verdrehungsspanner angeordnet ist und der den Stator, bei dem die Segmentspulen als ein Ergebnis des Drehens des Verdrehungsmechanismus in einem Zustand verdreht wurden, in dem die distalen Endabschnitte in die Einführungsabschnitte eingeführt sind, in eine Richtung drückt, die sich von dem Verdrehungsspanner wegbewegt, und die Segmentspulen und den Verdrehungsspanner trennt.

2. Statorherstellungsvorrichtung nach Anspruch 1, wobei der Trennungsspanner einen Trennungsspannergrundkörper, der zwischen dem Platzierungsablageständer und dem Verdrehungsspanner angeordnet ist, und einen Spannerbewegungsmechanismus, der den Trennungsspannergrundkörper in einer vertikalen Richtung bewegt, umfasst, und als ein Ergebnis davon, dass der Spannerbewegungsmechanismus den Trennungsspannergrundkörper gemäß dem Absenken durch den Hebe-/Senkmechanismus absenkt, der Trennungsspannergrundkörper den Statorkern drückt und die Segmentspulen von dem Verdrehungsspanner trennt.

3. Statorherstellungsvorrichtung nach Anspruch 1, wobei der Trennungsspanner einen Trennungsspannergrundkörper, der zwischen dem Platzierungsablageständer und dem Verdrehungsspanner angeordnet ist, und einen Verbindungsmechanismus, der den Trennungsspannergrundkörper und den Platzierungsablageständer verbindet, umfasst, und als ein Ergebnis davon, dass der Verbindungsmechanismus mit dem Platzierungsablageständer verbunden ist, bevor der Platzierungsablageständer durch den Hebe-/Senkmechanismus gesenkt wird, und der Trennungsspannergrundkörper gemäß dem Absenken durch den Hebe-/Senkmechanismus gesenkt wird, der Trennungsspannergrundkörper den Statorkern drückt und die Segmentspulen von dem Verdrehungsspanner trennt.

4. Statorherstellungsvorrichtung nach einem der Ansprüche 1 bis 3, wobei der Trennungsspanner eine Manschettenstützeinheit ist, die ein ringförmiges Basiselement, Manschettenstützen, die an dem Basiselement bereitgestellt sind und die zwischen Segmentspulen eingeführt werden, die an dem oberen Abschnitt des Statorkerns freigelegt sind, und die Isolierpapiere stützen, die in die Schlitze eingesetzt sind, und Vor-/Rückzugsmechanismen aufweist, die die Manschettenstützen in einer Richtung des Annäherns an oder Entfernens von einer axialen Mitte des Basiselements vor- und zurückbewegen.

5. Statorherstellungsvorrichtung nach Anspruch 4, wobei, wenn der Stator, der auf dem Platzierungsablageständer platziert wurde, durch den Hebe-/Senkmechanismus angehoben wird, ein Abschnitt des Basiselements an eine obere Oberfläche des Statorkerns anstößt.

6. Statorherstellungsvorrichtung nach Anspruch 1, ferner umfassend einen Drehtyp-Spannerhalter, der zwischen dem Verdrehungsspanner und dem Trennungsspanner angeordnet ist und eine Vielzahl von Stützabschnitten aufweist, die konfiguriert sind, um jeweils eine Vielzahl der Verdrehungsspanner zu stützen.

7. Statorherstellungsverfahren, umfassend:
einen Schritt des Platzierens, auf einem Platzierungsablageständer, eines Stators, der einen Statorkern aufweist, wobei der Statorkern eine Vielzahl von Schlitzen aufweist, und wobei der Stator ferner eine Vielzahl von Segmentspulen aufweist, die jeweils in die Schlitze eingeführt sind;
einen Schritt des Anordnens, oberhalb des Platzierungsablageständers, eines Verdrehungsspanners, der Einführungsabschnitte aufweist, in die distale Endabschnitte, die an einem oberen Abschnitt des Statorkerns freigelegt sind, der Segmentspulen des Stators, der auf dem Platzierungsablageständer platziert ist, eingeführt werden können;
einen Schritt des Anhebens des Platzierungsablageständers und des Einführens mindestens von Abschnitten der distalen Endabschnitte der Segmentspulen in die Einführungsabschnitte;
einen Schritt des Drehens des Verdrehungsspanners und des Verdrehens der distalen Endabschnitte der Segmentspulen; und
einen Schritt des Absenkens des Platzierungsablageständers und des Betreibens eines Trennungsspanners, der zwischen dem Platzierungsablageständer und dem Verdrehungsspanner angeordnet ist, und des Drückens des Stators in eine Richtung des Wegbewegens von dem Verdrehungsspanner und des Trennens der Segmentspulen von dem Verdrehungsspanner.

## Revendications

1. Dispositif de fabrication de stator, comprenant :
un socle de placement sur lequel est placé un stator ayant un noyau de stator, le noyau de stator ayant une pluralité de fentes, et le stator ayant en outre une pluralité de bobines à segments respectivement insérées dans les fentes ;
un mécanisme de levage/abaissement qui soulève et abaisse le socle de placement ;
un gabarit de torsion qui est disposé au-dessus du socle de placement et a des parties d'insertion dans lesquelles peuvent être insérées des parties d'extrémité distales, qui sont exposées au niveau d'une partie supérieure du noyau de stator, des bobines à segments ;
un mécanisme de torsion qui fait tourner le gabarit de torsion ; **caractérisé en ce qu'**il comprend en outre
un gabarit de séparation qui est disposé entre le socle de placement et le gabarit de torsion, et qui pousse le stator, au niveau duquel les bobines à segments ont subi une torsion en conséquence de la rotation du mécanisme de torsion dans un état dans lequel les parties d'extrémité distales sont insérées dans les parties d'insertion, dans une direction d'éloignement du gabarit de torsion et sépare les bobines à segments et le gabarit de torsion.

2. Dispositif de fabrication de stator selon la revendication 1, dans lequel le gabarit de séparation comprend un corps principal de gabarit de séparation disposé entre le socle de placement et le gabarit de torsion, et un mécanisme de déplacement de gabarit qui déplace le corps principal de gabarit de séparation dans une direction verticale, et, en conséquence de l'abaissement du corps principal de gabarit de séparation par le mécanisme de déplacement de gabarit conformément à l'abaissement par le mécanisme de levage/abaissement, le corps principal de gabarit de séparation pousse le noyau de stator et sépare les bobines à segments du gabarit de torsion.

3. Dispositif de fabrication de stator selon la revendication 1, dans lequel le gabarit de séparation comprend un corps principal de gabarit de séparation disposé entre le socle de placement et le gabarit de torsion, et un mécanisme de liaison qui relie le corps principal de gabarit de séparation et le socle de placement, et, en conséquence de la liaison au socle de placement par le mécanisme de liaison avant que le socle de placement ne soit abaissé par le mécanisme de levage/abaissement, et l'abaissement du corps principal de gabarit de séparation conformément à l'abaissement par le mécanisme de levage/abaissement, le corps principal de gabarit de séparation pousse le noyau de stator et sépare les bobines à segments du gabarit de torsion.

4. Dispositif de fabrication de stator selon l'une quelconque des revendications 1 à 3, dans lequel le gabarit de séparation est une unité de support de manchette ayant un élément de base qui est annulaire, des éléments de support de manchette qui sont disposés au niveau de l'élément de base et qui sont insérés entre des bobines à segments exposées au niveau de la partie supérieure du noyau de stator et qui supportent des papiers isolants insérés dans les fentes, et des mécanismes d'avancement/retrait qui avancent/retirent les éléments de support de manchette dans une direction d'approche ou d'éloignement d'un centre axial de l'élément de base.

5. Dispositif de fabrication de stator selon la revendication 4, dans lequel, lorsque le stator qui a été placé sur le socle de placement est soulevé par le mécanisme de levage/abaissement, une partie de l'élément de base vient en butée contre une surface supérieure du noyau de stator.

6. Dispositif de fabrication de stator selon la revendication 1, comprenant en outre un support de gabarit de type rotatif disposé entre le gabarit de torsion et le gabarit de séparation et ayant une pluralité de parties de support conçues pour supporter respectivement une pluralité des gabarits de torsion.

7. Procédé de fabrication de stator, comprenant :
une étape consistant à placer, sur un socle de placement, un stator ayant un noyau de stator, le noyau de stator ayant une pluralité de fentes, et le stator ayant en outre une pluralité de bobines à segments respectivement insérées dans les fentes ;
une étape consistant à disposer, au-dessus du socle de placement, un gabarit de torsion ayant des parties d'insertion dans lesquelles peuvent être insérées des parties d'extrémité distales, qui sont exposées au niveau d'une partie supérieure du noyau de stator, des bobines à segments du stator placé sur le socle de placement ;
une étape consistant à lever le socle de placement, et à insérer au moins des parties des parties d'extrémité distale des bobines à segments dans les parties d'insertion ;
une étape consistant à faire tourner le gabarit de torsion, et à effectuer une torsion des parties d'extrémité distale des bobines à segments ; et
une étape consistant à abaisser le socle de placement et à actionner un gabarit de séparation disposé entre le socle de placement et le gabarit de torsion, et à pousser le stator dans une direction d'éloignement du gabarit de torsion et de séparation des bobines à segments du gabarit de torsion.
